(19) **Europäisches Patentamt**
European Patent Office
Office européen des brevets

(11) **EP 2 166 398 A1**

(12) **EUROPÄISCHE PATENTANMELDUNG**

(43) Veröffentlichungstag:
24.03.2010 Patentblatt 2010/12

(51) Int Cl.:
*G02B 15/173* (2006.01)   *G02B 23/00* (2006.01)

(21) Anmeldenummer: 09170669.7

(22) Anmeldetag: 18.09.2009

(84) Benannte Vertragsstaaten:
AT BE BG CH CY CZ DE DK EE ES FI FR GB GR HR HU IE IS IT LI LT LU LV MC MK MT NL NO PL PT RO SE SI SK SM TR
Benannte Erstreckungsstaaten:
AL BA RS

(30) Priorität: 19.09.2008   DE 102008042221

(71) Anmelder: **Carl Zeiss Sports Optics GmbH**
**35576 Wetzlar (DE)**

(72) Erfinder: **Tautz, Volker**
**35578, Wetzlar (DE)**

(74) Vertreter: **Freischem, Werner**
**Patentanwälte Freischem,**
**An Gross St. Martin 2**
**50667 Köln (DE)**

(54) **Optisches System**

(57)    Die Erfindung betrifft ein optisches System (200) zur Abbildung eines Objekts auf eine Bilderfassungseinheit. Das optische System (200) weist dabei eine veränderliche Brennweite zum Zoomen auf. Es weist von dem Objekt in Richtung einer Bilderfassungseinheit genau drei Linseneinheiten auf, nämlich eine erste Linseneinheit (G1), eine zweite Linseneinheit (G2) und eine dritte Linseneinheit (G3). Die zweite Linseneinheit (G2) und die dritte Linseneinheit (G3) sind für eine Veränderung der Brennweite beweglich entlang einer optischen Achse des optischen Systems (200) angeordnet. Die erste Linseneinheit (G1) besteht aus einer ersten Linsengruppe (G1.1) und einer zweiten Linsengruppe (G1.2). Die erste Linsengruppe (G1.1) der ersten Linseneinheit (G1) ist unbeweglich auf der optischen Achse des optischen Systems (200) angeordnet. Die zweite Linsengruppe (G1.2) der ersten Linseneinheit (G1) jedoch ist für einen Fokussiervorgang beweglich entlang der optischen Achse des optischen Systems (200) angeordnet. Es ist vorgesehen, dass die zweite Linsengruppe (G1.2.) aus mindestens zwei Linsen (L4, L5) besteht.

Fig. 3

EP 2 166 398 A1

**Beschreibung**

Die Erfindung betrifft ein optisches System zur Abbildung eines Objekts auf eine Bilderfassungseinheit. Das optische System weist dabei eine veränderliche Brennweite zum Zoomen auf. Insbesondere betrifft die Erfindung ein Objektiv für ein Fernrohr, welches beispielsweise einen Vergrößerungsbereich von 15x bis 45x oder aber auch von 20x bis 60x aufweist. Der Begriff der Bilderfassungseinheit ist dabei sehr weit auszulegen. Wenn das optische System als Objektiv eines Fernrohres ausgebildet ist, dann ist die Bilderfassungseinheit beispielsweise die Netzhaut eines Betrachters. Es sind aber auch Ausführungsbeispiele der Erfindung denkbar, bei denen das erfindungsgemäße optische System zur Abbildung eines Objekts auf eine Bilderfassungseinheit in Form eines CCDs ausgebildet ist.

Aus der DE 704 17 03 ist ein Fernrohr mit einer veränderlichen Vergrößerung bekannt. Das Fernrohr weist ein optisches System in Form eines Zoomobjektivs, ein Prismenumkehrsystem sowie ein Okular auf. Das Zoomobjektiv ist mit 4 Linseneinheiten versehen, nämlich einer ersten Linseneinheit, einer zweiten Linseneinheit, einer dritten Linseneinheit und einer vierten Linseneinheit. Mit anderen Worten ausgedrückt ist das Zoomobjektiv viergliedrig ausgebildet. Zwei der vorgenannten Linseneinheiten, nämlich die zweite Linseneinheit und die dritte Linseneinheit sind entlang der optischen Achse beweglich angeordnet. Die erste Linseneinheit und die vierte Linseneinheit hingegen sind auf der optischen Achse feststehend angeordnet. Die vierte Linseneinheit dient dabei der Realisation des Hauptteils der notwendigen Brechkraft des Objektivs. Im Prinzip ist die vierte Linseneinheit ein Grundobjektiv, welchem im Wesentlichen ein afokaler Vorsatz mit variabler Vergrößerung vorgeschaltet ist. Dabei besteht der afokale Vorsatz aus der feststehenden ersten Linseneinheit, der beweglichen zweiten Linseneinheit und der beweglichen dritten Linseneinheit. Allerdings hat der vorgenannte Aufbau, bestehend aus einem Grundobjektiv mit einem afokalen Vorsatz, den Nachteil, dass sich im Vergleich zu der maximal erzielbaren Brennweite des Zoomobjektivs eine große Objektivbaulänge ergibt. Dies ist unerwünscht.

Aus der US 3,069,972 ist ein Fernrohr mit einem Objektiv veränderlicher Brennweite (Zoomobjektiv), einem Prismenumkehrsystem sowie mit einem Okular mit einer festen Brennweite bekannt. Das Objektiv des bekannten Fernrohres ist nach dem Prinzip des optischen Ausgleichs aufgebaut. Aus diesem Grund ist nur eine Bewegung entlang der optischen Achse notwendig, die von einer ersten Linseneinheit und einer zweiten Linseneinheit ausgeführt wird, zwischen denen eine feststehende dritte Linseneinheit angeordnet ist. Das bekannte Fernrohr weist allerdings aufgrund des Prinzips des optischen Ausgleichs den Nachteil auf, dass die Lage der Bildebene des abzubildenden Objekts über den Vergrößerungsbereich des Fernrohrs schwankt.

Aus der DE 10 2004 001 481 A1 ist ein Zoomfernrohr bekannt, das aus einem optischen System in Form eines Objektivs veränderlicher Brennweite, einem Okular fester Brennweite und einem Prismenumkehrsystem besteht, wobei das Prismenumkehrsystem zwischen dem Objektiv und dem Okular angeordnet ist. Das Objektiv weist von einem Objekt in Richtung des Okulars eine erste Linseneinheit, eine zweite Linseneinheit sowie eine dritte Linseneinheit auf. Die zweite Linseneinheit und die dritte Linseneinheit sind für einen Zoomvorgang beweglich entlang der optischen Achse des Objektivs angeordnet. Die erste Linseneinheit des Objektivs besteht aus einer ersten Linsengruppe, welche ein Kittglied aufweist, und einer zweiten Linsengruppe, welche aus nur einer einzelnen Linse besteht. Soll die Lage der Bildebene des Objekts bei der Einstellung auf endliche Objektentfernungen während eines Zoomvorgangs unverändert bleiben, muss eine Fokussierung durch Bewegen von Linseneinheiten entlang der optischen Achse des Objektivs erfolgen, wobei diese beweglichen Linseneinheiten vor der beweglichen zweiten Linseneinheit und der beweglichen dritten Linseneinheit liegen, welche der Änderung der Brennweite dienen. Aus der DE 10 2004 001 481 A1 ist es bekannt, dass die Einstellung auf endliche Objektentfernung durch Verschieben der vollständigen ersten Linseneinheit entlang der optischen Achse des Objektivs oder alternativ hierzu nur durch eine Bewegung der zweiten Linsengruppe der ersten Linseneinheit erfolgt, wobei die zweite Linsengruppe aus einer einzelnen Linse besteht. Ein konstantes Sehfeld wird durch Verwendung eines Zoomobjektivs und durch Anordnung einer Feldblende im Zwischenbild nach dem Zoomobjektiv bzw. dem Prismenumkehrsystem erzielt. Hierdurch ergibt sich für alle Zoomstellungen des Zoomobjektivs ein Zwischenbild mit dem gleichen Durchmesser. Nach dem Okular ergibt sich ein konstantes subjektives Sehfeld, unabhängig von der Zoomstellung. Das bekannte Fernrohr weist jedoch den Nachteil auf, dass eine Verschiebung der vollständigen ersten Linseneinheit zur Einstellung auf endliche Objektentfernungen eine Baulängenänderung des Objektivs (und damit auch des gesamten Fernrohrs) bedingt. Zwar kann dies mittels einer Innenfokussierung durch alleiniges Bewegen der zweiten Linsengruppe der ersten Linseneinheit vermieden werden. Da allerdings zur Einstellung auf eine endliche Objektentfernung nur eine einzelne Linse verschoben wird, verändern sich die sphärische Aberration und die Farbfehler des Objektivs sehr stark. Dies ist insbesondere für Objektive mit einer großen maximalen Brennweite (beispielsweise 500 mm) von Nachteil.

In der Regel ist ein Objektiv eines vorgenannten Fernrohrs aus dem Stand der Technik achromatisch korrigiert. So sind die Bildschnittweiten für rotes und blaues Licht gleich lang, jedoch weichen die Bildschnittweiten für grünes Licht ab. Diese Abweichung wird in der Regel als Farblängsfehler oder auch als sekundäres Spektrum bezeichnet. Das sekundäre Spektrum des Objektivs eines derartigen Fernrohrs führt jedoch oft zu Farbsäumen an Hell-Dunkel-Übergängen. Diese sind für einen Betrachter, der mittels des Fernrohres ein Objekt betrachtet, oft sehr störend. Diese Störung ist umso ersichtlicher, je größer die Brennweite des Objektivs und somit eine Vergrößerung des Objekts am Fernrohr gewählt wird.

Aus der US 6,226,132 B1 ist ein achromatisches Linsensystem bekannt, bei dem durch Wahl einer geeigneten abweichenden relativen Teildispersion das sekundäre Spektrum verringert werden kann. Allerdings beträgt die relative Öffnung dieses bekannten Linsensystems 1:10. Eine solche relative Öffnung ist für die Anwendung in Objektiven mit veränderlicher Brennweite für Fernrohre nicht ausreichend.

Der Erfindung liegt daher die Aufgabe zu Grunde, ein optisches System anzugeben, bei dem sowohl die sphärische Aberration als auch der Gauss-Fehler ausreichend korrigiert sind und bei dem die Baulänge sich nicht ändert.

Diese Aufgabe wird erfindungsgemäß durch ein optisches System mit den Merkmalen des Anspruchs 1 gelöst. Ein erfindungsgemäßes Fernrohr mit einem optischen System ist durch die Merkmale des Anspruchs 12 gegeben. Weitere Merkmale der Erfindung ergeben sich aus den weiteren Ansprüchen, der nachfolgenden Beschreibung und/ oder den beigefügten Figuren.

Das optische System gemäß der Erfindung ist zur Abbildung eines Objekts auf eine Bilderfassungseinheit vorgesehen. Wie oben bereits erwähnt, ist der Begriff der Bilderfassungseinheit dabei sehr weit auszulegen. Wenn das erfindungsgemäße optische System als Objektiv eines Fernrohrs ausgebildet ist, dann ist die Bilderfassungseinheit beispielsweise die Netzhaut eines Betrachters. Es sind aber auch Ausführungsbeispiele denkbar, bei denen das erfindungsgemäße optische System zur Abbildung eines Objekts auf eine Bilderfassungseinheit in Form eines CCD ausgebildet ist.

Das erfindungsgemäße optische System weist von dem Objekt in Richtung einer Bilderfassungseinheit genau drei Linseneinheiten auf, nämlich eine erste Linseneinheit, eine zweite Linseneinheit und eine dritte Linseneinheit. Unter einer Linseneinheit wird hier eine einzelne Linse oder aber auch eine aus mehreren Linsen zusammengesetzte Linseneinheit verstanden. Die zweite Linseneinheit und die dritte Linseneinheit sind für eine Veränderung der Brennweite (Zoomvorgang) beweglich entlang einer optischen Achse des optischen Systems angeordnet. Die erste Linseneinheit besteht aus einer ersten Linsengruppe und einer zweiten Linsengruppe. Unter einer Linsengruppe wird eine einzelne Linse oder aber auch eine aus mehreren Linsen zusammengesetzte Linsengruppe verstanden. Weitere Linsengruppen sind bei der ersten Linseneinheit nicht vorgesehen. Die erste Linsengruppe der ersten Linseneinheit ist unbeweglich auf der optischen Achse des optischen Systems angeordnet. Sie ist demnach feststehend. Die zweite Linsengruppe der ersten Linseneinheit jedoch ist für einen Fokussiervorgang beweglich entlang der optischen Achse des optischen Systems angeordnet. Es ist vorgesehen, dass die zweite Linsengruppe aus mindestens zwei Linsen besteht.

Überlegungen haben ergeben, dass durch das oben genannte optische System eine ausreichende Korrektur der sphärischen Aberration und des Gauss-Fehlers erreicht wird. Darüber hinaus weist das optische System eine feste Baulänge auf. Insbesondere weist die erste Linseneinheit eine Telewirkung auf, welche zu einer gegenüber der maximalen Brennweite des optischen Systems verkürzten Baulänge des optischen Systems führt. Darüber hinaus wird erzielt, dass nur Linsen der ersten Linseneinheit im freien Durchmesser so groß ausgeführt werden müssen wie der Eintrittspupillendurchmesser des optischen Systems. Alle anderen Linsen können einen freien Durchmesser aufweisen, der durchaus kleiner ist. Ferner ist es möglich, dass durch eine geeignete Wahl der Brennweiten der einzelnen Linseneinheiten die maximale Brennweite des optischen Systems im wesentlichen alleine durch die erste Linseneinheit realisiert wird. Die zweite Linseneinheit und die dritte Linseneinheit bilden dabei ein der ersten Linseneinheit nachgeschaltetes Zoomsystem zur Reduktion der Brennweite. Durch diesen Aufbau wird eine Verminderung des sekundären Spektrums ermöglicht, insbesondere bei der maximalen Brennweite des optischen Systems. Dieser Aufbau wirkt sich auch günstig auf die Baulänge des optischen Systems aus. Ferner haben Überlegungen ergeben, dass die relative Öffnung des optischen Systems bei einer maximalen Brennweite mindestens 1:5,9 beträgt.

Bei einer ersten Ausführungsform der Erfindung ist die erste Linseneinheit als eine sammelnde erste Linseneinheit ausgebildet. Die zweite Linseneinheit wiederum ist als eine zerstreuende zweite Linseneinheit ausgebildet. Die dritte Linseneinheit ist als eine sammelnde dritte Linseneinheit ausgebildet.

Bei einer weiteren Ausführungsform ist die erste Linsengruppe der ersten Linseneinheit als eine sammelnde erste Linsengruppe ausgebildet, wohingegen die zweite Linsengruppe der ersten Linseneinheit als eine zerstreuende zweite Linsengruppe ausgebildet ist.

Es ist bei einer wiederum weiteren Ausführungsform der Erfindung vorgesehen, dass die erste Linsengruppe eine als Sammellinse ausgebildete erste Linse, eine als Sammellinse ausgebildete zweite Linse und eine als Zerstreuungslinse ausgebildete dritte Linse aufweist. Die zweite Linsengruppe wiederum weist eine als Sammellinse ausgebildete vierte Linse und eine als Zerstreuungslinse ausgebildete fünfte Linse auf. Zusätzlich kann die zweite Linsengruppe als Kittglied ausgebildet sein.

Bei einer weiteren Ausführungsform des erfindungsgemäßen optischen Systems ist die zweite Linseneinheit ebenfalls aus mehreren Linsen zusammengesetzt. So ist es vorgesehen, dass die zweite Linseneinheit eine als Zerstreuungslinse ausgebildete sechste Linse, eine als Zerstreuungslinse ausgebildete siebte Linse und eine als Sammellinse ausgebildete achte Linse aufweist. Zusätzlich kann es vorgesehen sein, dass die siebte Linse und die achte Linse ein zerstreuendes Kittglied bilden.

Auch die dritte Linseneinheit weist bei einer weiteren Ausführungsform mehrere Linsen auf. So weist die dritte Linseneinheit eine als Sammellinse ausgebildete neunte Linse, eine als Zerstreuungslinse ausgebildete zehnte Linse, eine als Sammellinse ausgebildete elfte Linse, eine als Sammellinse ausgebildete zwölfte Linse sowie eine als Zerstreuungslinse ausgebildete dreizehnte Linse auf. Bei einer weiteren Ausführungsform ist es vorgesehen, dass die zwölfte Linse und die dreizehnte Linse ein zerstreuendes Kittglied bilden.

Zur weiteren Verringerung des sekundären Spektrums ist es bei einer weiteren Ausführungsform des erfindungsgemäßen optischen Systems vorgesehen, dass die zweite Linse aus einem Material gefertigt ist, dessen Abweichung der relativen Teildispersion die folgende Bedingung erfüllt:

$$\Delta\theta_{gF} > 0{,}025 \qquad \text{(Bedingung 1).}$$

Die dritte Linse ist dabei aus einem Material gefertigt, dessen Abweichung der relativen Teildispersion die folgende Bedingung erfüllt:

$$\Delta\theta_{gF} < -0{,}005 \qquad \text{(Bedingung 2).}$$

Auch die fünfte Linse ist aus einem Material gefertigt, dessen Abweichung der relativen Teildispersion die folgende Bedingung erfüllt:

$$\Delta\theta_{gF} < -0{,}005 \qquad \text{(Bedingung 3).}$$

Die elfte Linse ist ebenso aus einem Material gefertigt, dessen Abweichung der relativen Teildispersion die folgende Bedingung erfüllt:

$$\Delta\theta_{gF} > 0{,}004 \qquad \text{(Bedingung 4).}$$

Die zwölfte Linse wiederum ist aus einem Material gefertigt, dessen Abweichung der relativen Teildispersion die folgende Bedingung erfüllt:

$$\Delta\theta_{gF} > 0{,}004 \qquad \text{(Bedingung 5).}$$

Ferner ist es vorgesehen, dass die dreizehnte Linse aus einem Material gefertigt ist, dessen Abweichung der relativen Teildispersion die folgende Bedingung erfüllt:

$$\Delta\theta_{gF} < -0{,}005 \qquad \text{(Bedingung 6).}$$

$\Delta\theta_{g}F$ beschreibt die Abweichung der relativen Teildispersion hinsichtlich der g-Linie und F-Linie von einer Normalgeraden, welche durch zwei Bezugsgläser gegeben ist. Im Fall der vorliegenden Erfindung sind dies die Gläser NSL7 sowie PHM2 des Unternehmens OHARA. Die Abweichung der relativen Teildispersion von dieser Normalgeraden bestimmt sich dann aus der Formel:

$$\Delta\theta_{gF} = \frac{(n_g - n_F)}{(n_F - n_C)} - (0{,}6415 - 0{,}001618 \times v_d)$$

wobei $n_g$ die Brechzahl für die g-Linie, $n_F$ die Brechzahl für die F-Linie und $n_C$ die Brechzahl für die C-Linie ist. $v_d$ ist die Abbezahl für die d-Linie. Die entsprechenden Größen sind den Katalogen der Hersteller von optischen Gläsern für Linseneinheiten zu entnehmen.

Bei einer weiteren Ausführungsform des optischen Systems gemäß der Erfindung weisen die erste Linseneinheit, die zweite Linseneinheit sowie die dritte Linseneinheit und die in den vorgenannten Linseneinheiten enthaltene erste Linse, zweite Linse, dritte Linse, vierte Linse, fünfte Linse, sechste Linse, siebte Linse, achte Linse, neunte Linse, zehnte Linse, elfte Linse, zwölfte Linse und dreizehnte Linse die folgenden Eigenschaften auf:

Tabelle 1:

| Fläche | Radien | Abstand [mm] | $n_e$ | $v_e$ | $\Delta\theta_{gF}$ | Glas |
|---|---|---|---|---|---|---|
| Erste Flä che der ersten Lin se | 193,452 | 8,800 | 1,489150 | 70,2 | 0,0022 | S-FSL5 |
| Zweite Flä che der ersten Lin se | -461,963 | 0,300 | | | | |
| Erste Flä che der zweiten Linse | 133,330 | 13,800 | 1,498450 | 81,1 | 0,0280 | S-FPL51 |
| Zweite Flä che der zweiten Linse | -203,627 | 1,300 | | | | |
| Erste Flä che der dritten Lin se | -199,963 | 4,300 | 1,616690 | 44,0 | -0,0065 | S-NBM51 |
| Zweite Flä che der dritten Lin se | 199,963 | 89,054 | | | | |
| Erste Flä che der vierten Lin se | 172,546 | 8,400 | 1,624090 | 33,5 | 0,0070 | S-TIM2 |
| Erste Fläche der fünften Linse | -60,561 | 2,400 | 1,616690 | 44,0 | -0,0065 | S-NBM51 |
| Zweite Fläche der fünften Linse | 76,744 | D9 | | | | |
| Erste Fläche der sechsten Linse | 8008,430 | 2,300 | 1,489150 | 70,2 | 0,0022 | S-FSL5 |
| Zweite Fläche der sechsten Linse | 97,756 | 5,000 | | | | |
| Erste Fläche der siebten Linse | -107,668 | 2,000 | 1,732340 | 54,4 | -0,0086 | S-LAL18 |
| Erste Fläche der achten Linse | 68,366 | 5,000 | 1,812640 | 25,2 | 0,0158 | S-TIH6 |
| Zweite Fläche der achten Linse | 346,508 | D14 | | | | |
| Erste Fläche der neunten Linse | 116,707 | 5,000 | 1,591430 | 60,6 | -0,0018 | S-BAL35 |
| Zweite Flä che der neunten Linse | -150,657 | 6,000 | | | | |
| Erste Flä che der zehnten Linse | -45,364 | 3,500 | 1,761670 | 27,3 | 0,0133 | S-TIH4 |
| Zweite Flä che der zehnten Linse | -59,427 | 0,500 | | | | |
| Erste Flä che der elften Linse | 65,995 | 5,000 | 1,620330 | 63,0 | 0,0051 | S-PHM52 |
| Zweite Flä che der elften Linse | -202,293 | 0,500 | | | | |
| Erste Flä che der zwölften Linse | 54,889 | 5,500 | 1,620330 | 63,0 | 0,0051 | S-PHM52 |
| Erste Flä che der dreizehnten Linse | -223,543 | 2,000 | 1,616690 | 44,0 | -0,0065 | S-NBM51 |
| Zweite Flä che der dreizehnten Linse | 31,631 | D23GBE | | | | |

Tabelle 2:

| f' [mm] | 167,3 | 334,6 | 501,9 |
|---|---|---|---|
| D9 [mm] | 35,773 | 76,325 | 119,468 |
| D14 [mm] | 101,408 | 42,598 | 13,255 |

(fortgesetzt)

| D23GBE [mm] | 110,217 | 128,476 | 114,676 |
|---|---|---|---|
| Durchmesser Eintrittspupille [mm] | 38,44 | 65,3 | 85,0 |
| Relative Öffnung | 1 : 4,4 | 1 : 5,1 | 1: 5,9 |
| 2*Sigma | 4,5° | 2,25° | 1,5° |

Tabelle 3:

| Brennweite erste Linseneinheit [mm] | 502,73 |
|---|---|
| Brennweite erste Linsengruppe [mm] | 251,95 |
| Brennweite zweite Linsengruppe [mm] | -243,67 |
| Brennweite zweite Linseneinheit [mm] | -75,78 |
| Brennweite dritte Linseneinheit [mm] | 82,14 |

In der oben genannten Tabelle 1 sind die einzelnen Flächen der Linsen und deren Radien angegeben. Ferner ist der Abstand des Scheitelpunkts einer ersten Fläche zu dem Scheitelpunkt der nächsten Fläche angegeben. Dies gibt ebenfalls die Dicke der einzelnen Linsen wieder. Darüber hinaus sind in der Tabelle 1 mit $n_e$ die Brechzahl und mit $v_e$ die Abbezahl bezeichnet. Ferner ist die Glassorte der jeweiligen Linsen angegeben, wobei die Notation der Glassorten sich auf Glassorten des Unternehmens OHARA bezieht. Die mit D9, D14 und D23GBE gekennzeichneten Abstände sind variable Abstände, welche in Abhängigkeit der gewünschten Brennweite gewählt werden. Beispiele für diese Abstände bei verschiedenen Brennweiten des optischen Systems sind in der Tabelle 2 angegeben. Dabei ist D23GBE der Abstand bis zur paraxialen Bildebene (Gaussche Bildebene GBE) ohne einen Prismenglasweg. Ferner sind in der Tabelle 2 der Durchmesser der Eintrittspupille des optischen Systems, die relative Öffnung sowie der Öffnungswinkel für die entsprechenden Brennweiten angegeben.

Die Tabelle 3 gibt für das Ausführungsbeispiel des erfindungsgemäßen optischen Systems die einzelnen Brennweiten der ersten Linseneinheit, der zweiten Linseneinheit und der dritten Linseneinheit wieder. Ferner sind die einzelnen Brennweiten der ersten Linsengruppe und der zweiten Linsengruppe der ersten Linseneinheit angegeben.

Bei einem weiteren Ausführungsbeispiel des erfindungsgemäßen optischen Systems ist es vorgesehen, dass die Radien und Abstände innerhalb +/-10% sowie die Brechzahlen $n_e$ und die Abbezahlen $v_e$ innerhalb +/-5% variierbar sind.

Die Erfindung betrifft auch ein Fernrohr, welches mit einem optischen System ausgebildet ist, das mindestens eines der oben genannten Merkmale oder eine der oben genannten Merkmalskombinationen aufweist. Bei dem Fernrohr ist das optische System als Objektiv ausgebildet. Ferner ist das Fernrohr mit mindestens einer Bilderfassungseinheit ausgebildet. Die Erfindung wird insbesondere in einem Spektiv eingesetzt.

Bei einer Ausführungsform des Fernrohrs weist das Fernrohr eine Bilderfassungseinheit in Form eines Flächensensors auf, insbesondere ein CCD oder ein CMOS. Alternativ hierzu ist es vorgesehen, eine Bilderfassungseinheit in Form eines Okulars zur Verfügung zu stellen, mit dem ein Bild eines Objekts auf die Netzhaut eines Betrachters abgebildet wird. Bei einer weiteren Ausführungsform ist es beispielsweise vorgesehen, sowohl einen Flächensensor als auch ein Okular zur Verfügung zu stellen. Dieses Fernrohr ermöglicht gleichzeitig sowohl eine Betrachtung des Objekts (Netzhaut) als auch eine Abbildung des Objekts auf einen Flächensensor.

Bei einer weiteren Ausführungsform des Fernrohrs ist ein Prismenumkehrsystem vorgesehen, welches zur Baulängenverkürzung als Umlenkprisma ausgebildet sein kann. Zusätzlich oder alternativ hierzu ist es vorgesehen, das Prismenumkehrsystem als Strahlteiler auszubilden, wobei ein Teil des Strahles zum Okular und ein anderer Teil zum Flächensensor geleitet werden.

Aus dem Stand der Technik ist ein Fernrohr bekannt, das ein Okular mit variabler Brennweite aufweist. Hingegen weist das Okular bei einer Ausführungsform des erfindungsgemäßen Fernrohrs eine feste Brennweite auf. Im Unterschied zum Stand der Technik, bei dem das subjektive (augenseitige) Sehfeld von niedriger zu hoher Vergrößerung beispielsweise von 49° auf 68° steigt, ist bei dem erfindungsgemäßen Fernrohr, das ein Zoomobjektiv aufweist, das Sehfeld über den gesamten Vergrößerungsbereich konstant. Somit liegt bereits bei einer niedrigen Vergrößerung das große subjektive Sehfeld vor, das bei einem Fernrohr mit einem Okular mit variabler Brennweite erst bei einer hohen bzw. maximalen Vergrößerung erreicht wird.

Nachfolgend wird die Erfindung anhand von Ausführungsbeispielen näher erläutert. Dabei zeigen

Fig. 1a-1c    eine schematische Darstellung in Form eines Lin- senschnitts eines Fernrohrs mit einem optischen System;

Fig. 2a-2c    eine schematische Darstellung des Ausführungsbei- spiels gemäß Figur 1, wobei nur das optische Sys- tem sowie ein Prismenumkehrsystem gezeigt sind;

Fig. 3    eine schematische Darstellung des optischen Sys- tems gemäß den Figuren 1 und 2 in einer Stellung für minimale Brennweite;

Figur 4    ein Diagramm hinsichtlich des Farblängsfehlers (se- kundäres Spektrum) für das optische System nach den Figuren 1c und 2c; sowie

Figur 5    eine schematische Darstellung eines weiteren opti- schen Systems in Form eines Fernrohrs.

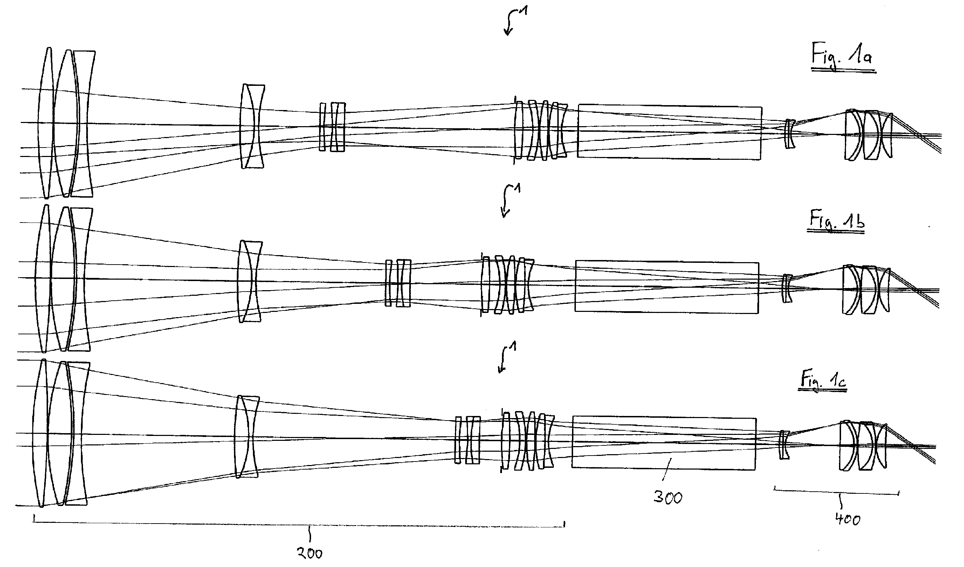

Die Figuren 1a bis 1c zeigen eine schematische Darstellung einer Ausführungsform eines Fernrohres 1. Dieses setzt sich aus einem optischen System in Form eines Objektivs 200, einem Prismenumkehrsystem 300 sowie einem Okular 400 zusammen. Das Prismenumkehrsystem 300 kann zusätzlich als Strahlteiler zur Aufteilung einfallender Strahlen in zwei Teilstrahlengänge ausgebildet sein. Die Figuren 1a bis 1c zeigen verschiedene Stellungen der einzelnen optischen Einheiten des Fernrohrs 1 bzw. des Objektivs 200, in denen verschiedene Vergrößerungen erzielt werden. Hierauf wird weiter unten noch näher eingegangen.

Das Objektiv 200 weist eine veränderliche Brennweite auf. Beispielsweise ist es vorgesehen, das Objektiv 200 für einen Brennweitenbereich von ca. 166,7mm bis ca. 500mm auszulegen. Wählt man dann das Okular 400 mit einer Brennweite von ca. 11,1mm, so wird das Fernrohr 1 eine veränderliche Vergrößerung von ca. 15x bis ca. 45x aufweisen. Wählt man das Okular 400 jedoch mit einer Brennweite von ca. 8,3mm, so liegt der Vergrößerungsbereich des Fernrohrs 1 bei ca. 20x bis ca. 60x. Das Sehfeld eines Betrachters ist über den gesamten vorgenannten Vergrößerungsbereich konstant und liegt beispielsweise bei 68°.

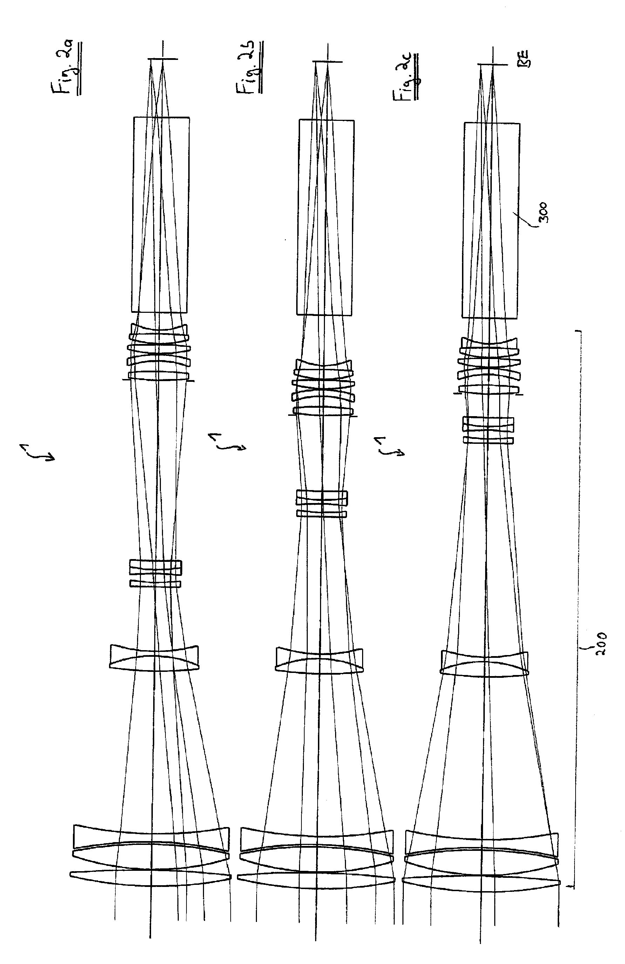

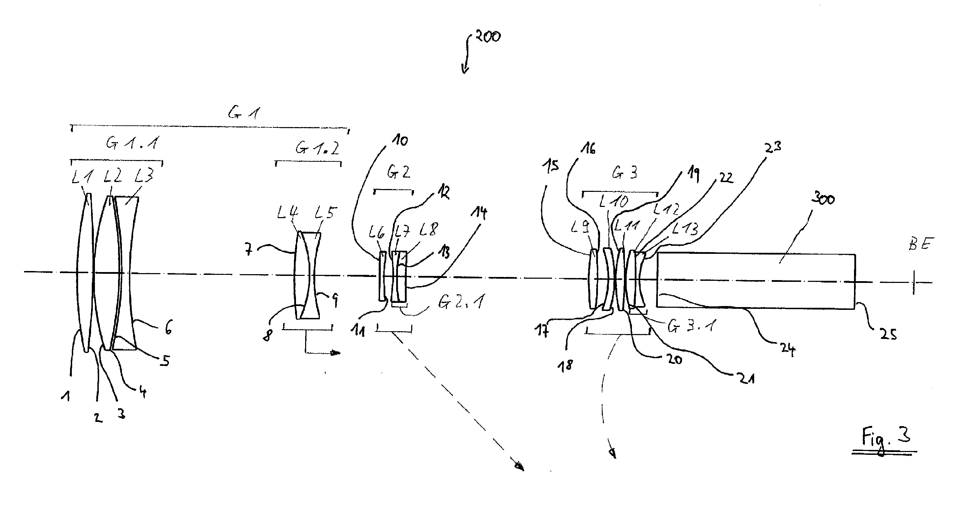

Figuren 2a bis 2c zeigen eine weitere schematische Darstellung des Fernrohrs 1 gemäß den Figuren 1a bis 1c. Allerdings ist nur ein Teilausschnitt des Fernrohrs 1 dargestellt, nämlich der Bereich des Objektivs 200 und des Prismenumkehrsystems 300. Ferner ist die Bildebene eines abzubildenden Objekts dargestellt, welche mit der Buchstabenkombination BE gekennzeichnet ist. Es sind die Stellungen der einzelnen optischen Einheiten des Objektivs 200 bei einer minimalen Brennweite (Figur 2a), bei einer mittleren Brennweite (Figur 2b) sowie bei einer maximalen Brennweite (Figur 2c) dargestellt. Die Einstellung der Brennweite sowie eine Fokussierung erfolgt durch Bewegungen von optischen Einheiten des Objektivs 200, die nun nachfolgend anhand der Figur 3 noch näher erläutert werden.

Wie Figur 3 zeigt, weist das Objektiv 200 vom abzubildenden Objekt in Richtung einer Bilderfassungseinheit in Form einer Netzhaut eines Betrachters (nicht dargestellt) bzw. in Richtung des Okulars 400 eine erste Linseneinheit G1, eine zweite Linseneinheit G2 und eine dritte Linseneinheit G3 auf. Die erste Linseneinheit G1 ist als eine sammelnde erste Linseneinheit ausgebildet, während die zweite Linseneinheit G2 als eine zerstreuende zweite Linseneinheit ausgebildet ist. Die dritte Linseneinheit G3 wiederum ist als eine sammelnde dritte Linseneinheit ausgebildet.

Die erste Linseneinheit G1 weist eine erste Linsengruppe G1.1 und eine zweite Linsengruppe G1.2 auf. Die erste Linsengruppe G1.1 ist vom Objekt in Richtung der Bilderfassungseinheit aus einer als Sammellinse ausgebildeten ersten Linse L1, einer als Sammellinse ausgebildeten zweiten Linse L2 sowie aus einer als Zerstreuungslinse ausgebildeten dritten Linse L3 zusammengesetzt. Die zweite Linsengruppe G1.2 weist eine als Sammellinse ausgebildete vierte Linse L4 und eine als Zerstreuungslinse ausgebildete fünfte Linse L5 auf. Die vierte Linse L4 und die fünfte Linse L5 bilden ein Kittglied. Die erste Linsengruppe G1.1 ist fest auf der optischen Achse des Objektivs 200 angeordnet. Sie wird daher nicht bewegt. Die zweite Linsengruppe G1.2 ist jedoch hinsichtlich der optischen Achse des Objektivs 200 zur Fokussierung beweglich angeordnet.

Die zweite Linseneinheit G2 weist eine als Zerstreuungslinse ausgebildete sechste Linse L6, eine als Zerstreuungslinse ausgebildete siebte Linse L7 und eine als Sammellinse ausgebildete achte Linse L8 auf. Die siebte Linse L7 und die achte Linse L8 bilden ein Kittglied, welches als ein zerstreuendes Glied G2.1 ausgebildet ist.

Die dritte Linseneinheit G3 wiederum weist eine als Sammellinse ausgebildete neunte Linse L9, eine als Zerstreuungslinse ausgebildete zehnte Linse L10, eine als Sammellinse ausgebildete elfte Linse L11 und ein zerstreuendes Glied G3.1 auf, welches aus einer als Sammellinse ausgebildeten zwölften Linse L12 und einer als Zerstreuungslinse ausgebildeten dreizehnten Linse L13 gebildet ist. Das zerstreuende Glied G3.1 ist als Kittglied ausgebildet.

Sowohl die zweite Linseneinheit G2 als auch die dritte Linseneinheit G3 sind beweglich zur Brennweitenveränderung (Zoomvorgang) an der optischen Achse des Objektivs 200 ausgebildet.

Nachfolgend werden in Tabellen die Eigenschaften der einzelnen Linseneinheiten G1 bis G3 sowie deren Linsen L1 bis L13 angegeben:

Tabelle 4:

| Fläche | Radien | Abstand [mm] | $n_e$ | $\nu_e$ | $\Delta\theta_{gF}$ | Glas |
|--------|--------|--------------|-------|---------|---------------------|------|
| 1 | 193,452 | 8,800 | 1,489150 | 70,2 | 0,0022 | S-FSL5 |
| 2 | -461,963 | 0,300 | | | | |
| 3 | 133,330 | 13,800 | 1,498450 | 81,1 | 0,0280 | S-FPL51 |
| 4 | -203,627 | 1,300 | | | | |
| 5 | -199,963 | 4,300 | 1,616690 | 44,0 | -0,0065 | S-NBM51 |
| 6 | 199,963 | 89,054 | | | | |
| 7 | 172,546 | 8,400 | 1,624090 | 33,5 | 0,0070 | S-TIM2 |
| 8 | -60,561 | 2,400 | 1,616690 | 44,0 | -0,0065 | S-NBM51 |
| 9 | 76,744 | D9 | | | | |
| 10 | 8008,430 | 2,300 | 1,489150 | 70,2 | 0,0022 | S-FSL5 |
| 11 | 97,756 | 5,000 | | | | |
| 12 | -107,668 | 2,000 | 1,732340 | 54,4 | -0,0086 | S-LAL18 |
| 13 | 68,366 | 5,000 | 1,812640 | 25,2 | 0,0158 | S-TIH6 |
| 14 | 346,508 | D14 | | | | |
| 15 | 116,707 | 5,000 | 1,591430 | 60,6 | -0,0018 | S-BAL35 |
| 16 | -150,657 | 6,000 | | | | |
| 17 | -45,364 | 3,500 | 1,761670 | 27,3 | 0,0133 | S-TIH4 |
| 18 | -59,427 | 0,500 | | | | |
| 19 | 65,995 | 5,000 | 1,620330 | 63,0 | 0,0051 | S-PHM52 |
| 20 | -202,293 | 0,500 | | | | |
| 21 | 54,889 | 5,500 | 1,620330 | 63,0 | 0,0051 | S-PHM52 |
| 22 | -223,543 | 2,000 | 1,616690 | 44,0 | -0,0065 | S-NBM51 |
| 23 | 31,631 | D23 | | | | |
| 24 | Unendlich | 107,254 | 1,571250 | 55,7 | | N-BaK4 |
| 25 | Unendlich | 31,994 | | | | |
| 26 | Unendlich | | | | | |

Tabelle 5:

| | | | |
|---|---|---|---|
| f [mm] | 167,3 | 334,6 | 501,9 |
| D9 [mm] | 35,773 | 76,325 | 119,468 |
| D14 [mm] | 101,408 | 42,598 | 13,255 |
| D23 [mm] | 9,961 | 28,221 | 14,421 |
| Durchmesser Eintrittspupille [mm] | 38,44 | 65,3 | 85,0 |
| Relative Öffnung | 1 : 4,4 | 1 : 5,1 | 1: 5,9 |
| 2*Sigma | 4,5° | 2,25° | 1,5° |

Tabelle 6:

| Brennweite erste Linseneinheit G1 [mm] | 502,73 |
|---|---|
| Brennweite erste Linsengruppe G1.1 [mm] | 251,95 |
| Brennweite zweite Linsengruppe G1.2 [mm] | -243,67 |
| Brennweite zweite Linseneinheit G2 [mm] | -75,78 |
| Brennweite dritte Linseneinheit G3 [mm] | 82,14 |

Aus der Tabelle 4 gehen die einzelnen Flächen der Linsen L1 bis L13 hervor. Ferner sind die Radien der einzelnen Flächen angegeben. Darüber hinaus ist der Abstand des Scheitelpunkts einer ersten Fläche zu dem Scheitelpunkt der nächsten Fläche angegeben. Dies gibt auch die Dicke der einzelnen Linsen L1 bis L13 wieder. Die Fläche 26 ist die Position der Bildebene. Da - wie oben erwähnt - einige Linsen beweglich angeordnet sind, sind variable Abstände in der Tabelle angegeben. Dies sind die Abstände, die mit D9, D14 und D23 bezeichnet sind. Die vorgenannten Abstände werden je nach gewünschter Brennweite des Objektivs 200 gewählt. Beispielhafte Größen sind in der Tabelle 5 angegeben. Ferner sind die entsprechenden Durchmesser der Eintrittspupille, die relativen Öffnungen sowie der Öffnungswinkel bei den entsprechenden Brennweiten angegeben.

Bei diesem Ausführungsbeispiel weisen die erste Linseneinheit G1 (bestehend aus der ersten Linsengruppe G1.1 sowie der zweiten Linsengruppe G1.2), die zweite Linseneinheit G2 sowie die dritte Linseneinheit G3 bestimmte Brennweiten auf, welche in der Tabelle 6 dargestellt sind.

Durch die Wahl der Brennweiten für die erste Linseneinheit G1, die zweite Linseneinheit G2 und die dritte Linseneinheit G3 wird erzielt, dass mittels der ersten Linseneinheit G1 alleine bereits ungefähr die maximale Brennweite des Objektivs 200 zur Verfügung gestellt wird. Die zweite Linseneinheit G2 und die dritte Linseneinheit G3 agieren dann als ein der ersten Linseneinheit G1 nachgeschaltetes Zoomsystem zur Reduktion der Brennweite.

Der vorgenannte Aufbau erleichtert die angestrebte Reduktion des sekundären Spektrums, insbesondere bei der maximalen Brennweite des Objektivs 200. Ferner wirkt sich der vorgenannte Aufbau günstig auf die Objektivbaulänge aus, die nicht allzu groß ist.

Zur Verringerung des sekundären Spektrums, insbesondere bei einer maximalen Brennweite des Objektivs 200 von f'=502mm erfüllen die Linsen L1 bis L13 die bereits oben genannten Bedingungen 1 bis 6. Die Korrektur der Farblängsfehler ist bei dem diskutierten Ausführungsbeispiel nicht exakt bis zur apochromatischen Korrektur gebracht worden, bei der die Schnittweite für drei Wellenlängen gleich ist. Vielmehr erzielt man eine achromatische Korrektur, bei der die Schnittweite für zwei Wellenlängen gleich ist und bei der das sekundäre Spektrum stark verringert ist. Durch die Verwendung der entsprechenden vierten Linsen L4 und der fünften Linse L5 in der zweiten Linsengruppe G1.2 in Verbindung mit den weiteren Konstruktionsdaten nach den Tabellen 4 bis 6 wird eine gute Korrektur der sphärischen Aberration und des Gauss-Fehlers, insbesondere bei der maximalen Brennweite des Objektivs 200, erzielt.

Bei dem oben diskutierten Ausführungsbeispiel ist die erste Linse L1 aus keinem Glas gebildet, welches eine abweichende relative Teildispersion aufweist. Gläser mit einer abweichenden relativen Teildispersion sind oft empfindlicher als andere Gläser, so dass Gläser mit einer abweichenden relativen Teildispersion zum Schutz der weiteren Linsen nicht so sehr geeignet sind. Aus diesem Grund ist die erste Linse L1 aus einem etwas unempfindlicheren Material gebildet.

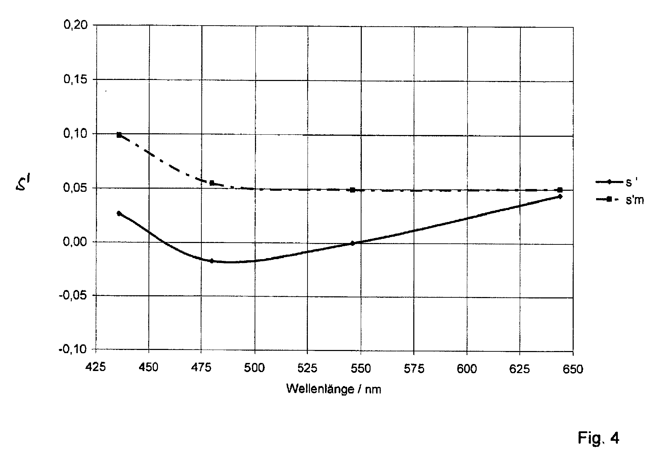

Figur 4 zeigt ein Diagramm hinsichtlich des paraxialen Farblängsfehlers (sekundäres Spektrum) für das Objektiv 200 nach den Figuren 1c und 2c bei einer maximalen Brennweite des Objektivs 200 von f'=502mm. Dargestellt sind der paraxiale Farblängsfehler s' und der Farblängsfehler s'm bis zur besten Auffangebene bei der jeweiligen Wellenlänge. Der Unterschied zwischen den Kurven s' und s'm resultiert aus der sphärischen Aberration und dem Gauss-Fehler. s'm ist die Schnittweite, nach der das Bild fokussiert wird. Es ist ersichtlich, dass der Farblängsfehler s' gering ist.

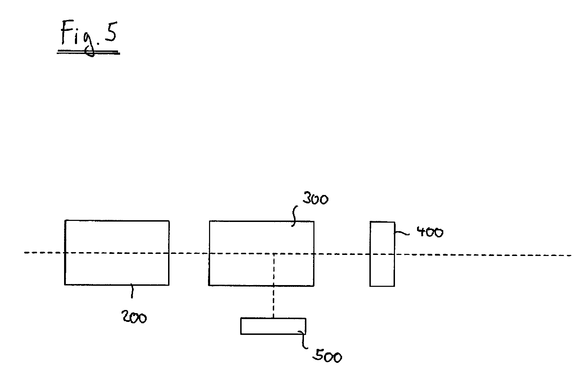

Figur 5 zeigt in einer schematischen Darstellung ein weiteres Ausführungsbeispiel eines Fernrohrs 1, das ebenfalls mit dem oben diskutierten Objektiv 200, mit dem Prismenumkehrsystem 300 und dem Okular 400 versehen ist. Zusätzlich weist das Fernrohr 1 eine Bilderfassungseinheit in Form eines Flächensensors 500 auf, beispielsweise ein CCD oder ein CMOS. Das Prismenumkehrsystem 300 ist als Strahlteiler ausgebildet, so dass ein Teil der einfallenden Strahlen zum Okular 400 und ein anderer Teil des einfallenden Lichts zum Flächensensor 500 geleitet wird. Dieses Fernrohr 1 ermöglicht somit gleichzeitig sowohl eine Betrachtung des Objekts (Netzhaut) als auch eine Abbildung des Objekts auf dem Flächensensor 500.

**Bezugszeichenliste**

1    Fernrohr

| 200 | Objektiv |
| 300 | Prismenumkehrsystem |
| 400 | Okular |
| 500 | Flächensensor |

| BE | Bildebene |
| L1-L13 | einzelne Linsen |

| G1 | erste Linseneinheit |
| G2 | zweite Linseneinheit |
| G3 | dritte Linseneinheit |

| G1.1 | erste Linsengruppe der ersten Linseneinheit |
| G1.2 | zweite Linsengruppe der zweiten Linseneinheit |

**Patentansprüche**

1. Optisches System (200) zur Abbildung eines Objekts auf eine Bilderfassungseinheit, wobei

   - das optische System (200) von dem Objekt in Richtung einer Bilderfassungseinheit genau drei Linseneinheiten (G1, G2, G3) aufweist, nämlich eine erste Linseneinheit (G1), eine zweite Linseneinheit (G2) und eine dritte Linseneinheit (G3),
   - die zweite Linseneinheit (G2) und die dritte Linseneinheit (G3) für einen Zoomvorgang beweglich entlang einer optischen Achse des optischen Systems (200) angeordnet sind,
   - die erste Linseneinheit (G1) aus einer ersten Linsengruppe (G1.1) und einer zweiten Linsengruppe (G1.2) besteht,
   - die erste Linsengruppe (G1.1) der ersten Linseneinheit (G1) unbeweglich auf der optischen Achse des optischen Systems (200) angeordnet ist, und wobei
   - die zweite Linsengruppe (G1.2) der ersten Linseneinheit (G1) für einen Fokussiervorgang beweglich entlang der optischen Achse des optischen Systems (200) angeordnet ist,

   **dadurch gekennzeichnet,**
   **dass** die zweite Linsengruppe (G1.2) aus mindestens zwei Linsen (L4, L5) besteht.

2. Optisches System (200) nach Anspruch 1, **dadurch gekennzeichnet, dass**

   - die erste Linseneinheit (G1) als eine sammelnde erste Linseneinheit ausgebildet ist,
   - die zweite Linseneinheit (G2) als eine zerstreuende zweite Linseneinheit ausgebildet ist, und dass
   - die dritte Linseneinheit (G3) als eine sammelnde dritte Linseneinheit ausgebildet ist.

3. Optisches System (200) nach Anspruch 1 oder 2, **dadurch gekennzeichnet, dass**

   - die erste Linsengruppe (G1.1) der ersten Linseneinheit (G1) als eine sammelnde erste Linsengruppe ausgebildet ist, und dass
   - die zweite Linsengruppe (G1.2) der ersten Linseneinheit (G1) als eine zerstreuende zweite Linsengruppe ausgebildet ist.

4. Optisches System (200) nach einem der vorangehenden Ansprüche, **dadurch gekennzeichnet, dass**

   - die erste Linsengruppe (G1.1) eine als Sammellinse ausgebildete erste Linse (L1), eine als Sammellinse ausgebildete zweite Linse (L2) und eine als Zerstreuungslinse ausgebildete dritte Linse (L3) aufweist, und dass
   - die zweite Linsengruppe (G1.2) eine als Sammellinse ausgebildete vierte Linse (L4) und eine als Zerstreuungslinse ausgebildete fünfte Linse (L5) aufweist.

5. Optisches System (200) nach Anspruch 4, **dadurch gekennzeichnet, dass** die zweite Linsengruppe (G.1.2) als Kittglied ausgebildet ist.

**6.** Optisches System (200) nach einem der vorangehenden Ansprüche, **dadurch gekennzeichnet, dass** die zweite Linseneinheit (G2)

- eine als Zerstreuungslinse ausgebildete sechste Linse (L6),
- eine als Zerstreuungslinse ausgebildete siebte Linse (L7) und
- eine als Sammellinse ausgebildete achte Linse (L8) aufweist.

**7.** Optisches System (200) nach Anspruch 6, **dadurch gekennzeichnet, dass** die siebte Linse (L7) und die achte Linse (L8) ein zerstreuendes Kittglied bilden.

**8.** Optisches System (200) nach einem der vorangehenden Ansprüche, **dadurch gekennzeichnet, dass** die dritte Linseneinheit (G3)

- eine als Sammellinse ausgebildete neunte Linse (L9),
- eine als Zerstreuungslinse ausgebildete zehnte Linse (L10),
- eine als Sammellinse ausgebildete elfte Linse (L11),
- eine als Sammellinse ausgebildete zwölfte Linse (L12), und
- eine als Zerstreuungslinse ausgebildete dreizehnte Linse (L13) aufweist.

**9.** Optisches System (200) nach Anspruch 8, **dadurch gekennzeichnet, dass** die zwölfte Linse (L12) und die dreizehnte Linse (L13) ein zerstreuendes Kittglied (G3.1) bilden.

**10.** Optisches System (200) nach einem der Ansprüche 4 bis 9, **dadurch gekennzeichnet, dass**

- die zweite Linse (L2) aus einem Material gefertigt ist, dessen Abweichung der relativen Teildispersion die folgende Bedingung erfüllt:

$$\Delta\theta_{gF} > 0{,}025$$

- die dritte Linse (L3) aus einem Material gefertigt ist, dessen Abweichung der relativen Teildispersion die folgende Bedingung erfüllt:

$$\Delta\theta_{gF} < -0{,}005$$

- die fünfte Linse (L5) aus einem Material gefertigt ist, dessen Abweichung der relativen Teildispersion die folgende Bedingung erfüllt:

$$\Delta\theta_{gF} < -0{,}005$$

- die elfte Linse (L11) aus einem Material gefertigt ist, dessen Abweichung der relativen Teildispersion die folgende Bedingung erfüllt:

$$\Delta\theta_{gF} > 0{,}004$$

- die zwölfte Linse (L12) aus einem Material gefertigt ist, dessen Abweichung der relativen Teildispersion die folgende Bedingung erfüllt:

$$\Delta\theta_{gF} > 0,004$$

und wobei
- die dreizehnte Linse (L13) aus einem Material gefertigt ist, dessen Abweichung der relativen Teildispersion die folgende Bedingung erfüllt:

$$\Delta\theta_{gF} < -0,005.$$

**11.** Optisches System (200) nach einem der Ansprüche 4 bis 10, **dadurch gekennzeichnet, dass** die erste Linseneinheit (G1), die zweite Linseneinheit (G2) sowie die dritte Linseneinheit (G3) und die erste Linse (L1), die zweite Linse (L2), die dritte Linse (L3), die vierte Linse (L4), die fünfte Linse (L5), die sechste Linse (L6), die siebte Linse (L7), die achte Linse (L8), die neunte Linse (L9), die zehnte Linse (L10), die elfte Linse (L11), die zwölfte Linse (L12) und die dreizehnte Linse (L13) die folgenden Eigenschaften aufweisen:

| Fläche | Radien | Abstand [mm] | $n_e$ | $\nu_e$ | $\Delta\theta_{gF}$ | Glas |
|---|---|---|---|---|---|---|
| Erste Flä che (1) der ersten Linse (L1) | 193,452 | 8,800 | 1,489150 | 70,2 | 0,0022 | S-FSL5 |
| Zweite Flä che (2) der ersten Linse (L1) | -461,963 | 0,300 | | | | |
| Erste Flä che (3) der zweiten Linse (L2) | 133,330 | 13,800 | 1,498450 | 81,1 | 0,0280 | S-FPL51 |
| Zweite Flä che (4) der zweiten Linse (L2) | -203,627 | 1,300 | | | | |
| Erste Flä che (5) der dritten Lin se (L3) | -199,963 | 4,300 | 1,616690 | 44,0 | -0,0065 | S-NBM51 |
| Zweite Flä che (6) der dritten Lin se (L3) | 199,963 | 89,054 | | | | |
| Erste Flä che (7) der vierten Lin se (L4) | 172,546 | 8,400 | 1,624090 | 33,5 | 0,0070 | S-TIM2 |
| Erste Flä che (8) der fünften Lin se (L5) | -60,561 | 2,400 | 1,616690 | 44,0 | -0,0065 | S-NBM51 |
| Zweite Flä che (9) der fünften Lin se (L5) | 76,744 | D9 | | | | |
| Erste Flä che (10) der sechsten Linse (L6) | 8008,430 | 2,300 | 1,489150 | 70,2 | 0,0022 | S-FSL5 |
| Zweite Flä che (11) der sechsten Linse (L6) | 97,756 | 5,000 | | | | |
| Erste Flä che (12) der siebten Linse (L7) | -107,668 | 2,000 | 1,732340 | 54,4 | -0,0086 | S-LAL18 |
| Erste Flä che (13) der achten Lin se (L8) | 68,366 | 5,000 | 1,812640 | 25,2 | 0,0158 | S-TIH6 |
| Zweite Flä che (14) der achten Lin se (L8) | 346,508 | D14 | | | | |

(fortgesetzt)

| Fläche | Radien | Abstand [mm] | $n_e$ | $\nu_e$ | $\Delta\theta_{gF}$ | Glas |
|---|---|---|---|---|---|---|
| Erste Flä che (15) der neunten Linse (L9) | 116,707 | 5,000 | 1,591430 | 60,6 | -0,0018 | S-BAL35 |
| Zweite Flä che (16) der neunten Linse (L9) | -150,657 | 6,000 | | | | |
| Erste Flä che (17) der zehnten Linse (L10) | -45,364 | 3,500 | 1,761670 | 27,3 | 0,0133 | S-TIH4 |
| Zweite Flä che (18) der zehnten Linse (L10) | -59,427 | 0,500 | | | | |
| Erste Flä che (19) der elften Linse (L11) | 65,995 | 5,000 | 1,620330 | 63,0 | 0,0051 | S-PHM52 |
| Zweite Flä che (20) der elften Linse (L11) | -202,293 | 0,500 | | | | |
| Erste Flä che (21) der zwölften Linse (L12) | 54,889 | 5,500 | 1,620330 | 63,0 | 0,0051 | S-PHM52 |
| Erste Flä che (22) der dreizehnten Linse (L13) | -223,543 | 2,000 | 1,616690 | 44,0 | -0,0065 | S-NBM51 |
| Zweite Flä che (23) der dreizehnten Linse (L13) | 31,631 | D23GBE | | | | |

| | | | |
|---|---|---|---|
| f' [mm] | 167,3 | 334,6 | 501,9 |
| D9 [mm] | 35,773 | 76,325 | 119,468 |
| D14 [mm] | 101,408 | 42,598 | 13,255 |
| D23GBE [mm] | 110,217 | 128,476 | 114,676 |
| Durchmesser Eintrittspupille [mm] | 38,44 | 65,3 | 85,0 |
| Relative Öffnung | 1 : 4,4 | 1 : 5,1 | 1: 5,9 |
| 2*Sigma | 4,5° | 2,25° | 1,5° |

| | |
|---|---|
| Brennweite erste Linseneinheit (G1) [mm] | 502,73 |
| Brennweite erste Linsengruppe (G1.1) [mm] | 251,95 |
| Brennweite zweite Linsengruppe (G1.2) [mm] | -243,67 |
| Brennweite zweite Linseneinheit (G2) [mm] | -75,78 |
| Brennweite dritte Linseneinheit (G3) [mm] | 82,14 |

12. Fernrohr (1) mit

- einem Objektiv (200), das als optisches System nach einem der vorangehenden Ansprüche ausgebildet ist, sowie mit
- mindestens einer Bilderfassungseinheit (400, 500).

13. Fernrohr (1) nach Anspruch 12, **dadurch gekennzeichnet, dass** die Bilderfassungseinheit als ein Flächensensor (500), insbesondere ein CCD oder ein CMOS ausgebildet ist.

**14.** Fernrohr (1) nach Anspruch 12, **dadurch gekennzeichnet, dass** die Bilderfassungseinheit als Okular (400) ausgebildet ist.

**15.** Fernrohr (1) nach einem der Ansprüche 12 bis 14, **gekennzeichnet durch** ein Prismenumkehrsystem (300).

Fig. 1a

Fig. 1b

Fig. 1c

Fig. 2a

Fig. 2b

Fig. 2c

Fig. 3

Fig. 4

Fig. 5

Europäisches
Patentamt
European
Patent Office
Office européen
des brevets

# EUROPÄISCHER RECHERCHENBERICHT

**Nummer der Anmeldung**

EP 09 17 0669

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2008/204893 A1 (JEONG JAE CHEOL [KR] ET AL) 28. August 2008 (2008-08-28) * Absätze [0012] - [0014]; Abbildungen 1a,1b * | 1 | INV. G02B15/173 G02B23/00 |
| X<br>Y | US 2008/024877 A1 (KAWAKAMI ETSURO [JP] ET AL) 31. Januar 2008 (2008-01-31) * Zusammenfassung; Abbildung 1 * | 1,2<br>12-15 | |
| X | JP 08 248314 A (NIPPON KOGAKU KK) 27. September 1996 (1996-09-27) * Zusammenfassung; Abbildungen 1-25 * | 8-10 | |
| A | "Handbook of Optics" 1995, MICHAEL BASS , XP002566220 * Seite 1.23 - Seite 1.26 * | 10 | |
| A | ROBERT R. SHANNON: "The Art and Science of optical Design." 1997, CAMBRIDGE UNIVERSITY PRESS , XP002566221 * Seite 185 - Seite 191 * | 10 | **RECHERCHIERTE SACHGEBIETE (IPC)** G02B |
| Y | US 2002/101661 A1 (HARADA AKIRA [JP]) 1. August 2002 (2002-08-01) * Absätze [0003], [0069]; Abbildung 25 * | 12-15 | |

~~Der vorliegende Recherchenbericht wurde für alle Patentan~~sprüche erstellt

| Recherchenort | Abschlußdatum der Recherche | Prüfer |
|---|---|---|
| München | 1. Februar 2010 | Daffner, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt
European
Patent Office
Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☒ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

1,2, 8-15

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt
European
Patent Office
Office européen
des brevets

**MANGELNDE EINHEITLICHKEIT
DER ERFINDUNG
ERGÄNZUNGSBLATT B**

Nummer der Anmeldung

EP 09 17 0669

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1,2

    Ein Zoomobjektiv mit der Abfolge der Linsengruppen mit positiver, negativer und positiver Brechkraft.
    ---

2. Ansprüche: 3-5,11

    in Zoomobjektiv bei dem die erste Linsengruppe aus einer positiven und einer negativen Einheit besteht.
    Anspruch 11 wird als dieser Gruppe zugehörig betrachtet, insofern er auf einen Anspruch dieser Gruppe rückbezogen ist.
    ---

3. Ansprüche: 6,7,11

    Ein Zoomobjektiv bei dem die zweite Linsengruppe eine zerstreuende erste Linse, eine zerstreuende zweite Linse und eine sammelnde achte Linse umfasst.
    Anspruch 11 wird als dieser Gruppe zugehörig betrachtet, insofern er auf einen Anspruch dieser Gruppe rückbezogen ist.
    ---

4. Ansprüche: 8-10,11

    Ein Zoomobjektiv bei dem die dritte Linseneinheit eine als Sammellinse ausgebildete Linse, eine als Zerstreuungslinse ausgebildete Linse, eine als Sammellinse ausgebildete Linse, eine als Sammellinse ausgebildete Linse, und eine als Zerstreuungslinse ausgebildete Linse aufweist.
    Der Anspruch 10 nimmt Bezug auf eine elfte bis dreizehnte Linse die jedoch erst in Anspruch 8 definiert wird.
    Anspruch 11 wird als dieser Gruppe zugehörig betrachtet, insofern er auf einen Anspruch dieser Gruppe rückbezogen ist.
    ---

5. Ansprüche: 12-15

    Ein Fernrohr mit einem Zoomobjektiv.
    ---

## ANHANG ZUM EUROPÄISCHEN RECHERCHENBERICHT
## ÜBER DIE EUROPÄISCHE PATENTANMELDUNG NR.

EP 09 17 0669

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-02-2010

| Im Recherchenbericht angeführtes Patentdokument | Datum der Veröffentlichung | Mitglied(er) der Patentfamilie | Datum der Veröffentlichung |
|---|---|---|---|
| US 2008204893 A1 | 28-08-2008 | JP 2008197659 A | 28-08-2008 |
| US 2008024877 A1 | 31-01-2008 | JP 4193887 B2<br>JP 2008033069 A | 10-12-2008<br>14-02-2008 |
| JP 8248314 A | 27-09-1996 | JP 3508273 B2 | 22-03-2004 |
| US 2002101661 A1 | 01-08-2002 | JP 3564061 B2<br>JP 2002162564 A | 08-09-2004<br>07-06-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 7041703
- US 3069972 A
- DE 102004001481 A1
- US 6226132 B1